# EUROPEAN PATENT APPLICATION

(11) **EP 1 063 542 A1**
(43) Date of publication of application: **27.12.2000**
(21) Application number: 00900128.0
(22) Date of filing: 06.01.2000
(51) Int. Cl.: G02B 6/00, G02B 6/22, G02B 6/44

(54) **DISPERSION COMPENSATING OPTICAL FIBER**

(30) Priority: 06.01.1999 JP 112999; 16.09.1999 JP 26228199
(71) Applicant: Sumitomo Electric Industries, Ltd., Osaka-shi, Osaka 541-0041 (JP)
(72) Inventor: Sasaoka, Eisuke, Yokohama Works of Sumitomo, Yokohama-shi, Kanagawa 244-8588 (JP); Tanaka, Shigeru, Yokohama Works of Sumitomo, Yokohama-shi, Kanagawa 244-8588 (JP); Kobayasahi, Kohei, Yokohama Works of Sumitomo, Yokohama-shi, Kanagawa 244-8588 (JP); Tamano, Kenji, Yokohama Works of Sumitomo, Yokohama-shi, Kanagawa 244-8588 (JP); Fujii, Takashi, Yokohama Works of Sumitomo, Yokohama-shi, Kanagawa 244-8588 (JP)
(74) Representative: Grünecker, Kinkeldey, Stockmair & Schwanhäusser Anwaltssozietät
(86) International application number: JP0000026
(87) International publication number: WO0041011

(57) **Abstract**

An optical component comprising an optical fiber coil comprised of an optical fiber wound in a coil shape, and a resin surrounding at least the periphery of the optical fiber coil to retain the shape of the optical fiber coil; and a production method of the optical component comprising an optical fiber coil forming step of winding an optical fiber to form an optical fiber coil, and a resin portion forming step of forming a resin around the periphery of the optical fiber coil formed in the optical fiber forming step.

## Description

### Technical Field

The present invention relates to a dispersion compensator for reducing chromatic dispersion of signal light in an optical fiber transmission line and a production method thereof.

### Background Art

For long-distance large-capacity transmission in the longer wavelength region of 1.55 µm and higher by use of the single-mode Optical fiber having the zero dispersion wavelength around 1.3 µm (1.3 SMF), dispersion compensators have been developed for the purpose of canceling out the chromatic dispersion in the longer wavelength region.

Such dispersion compensators are formed in compact coiled structure of a long dispersion compensating fiber (DCF) having large chromatic dispersion in an opposite sign to that of the 1.3 SMF. However, winding in the coiled structure causes bending loss, so as to degrade the performance of the fiber. Therefore, various techniques have been developed in order to suppress the bending loss.

Among such techniques, the technology disclosed in Japanese Patent Application Laid-Open No. 10-123342 involves a technique wherein the DCF is wound around a bobbin to form an optical fiber coil, thereafter the optical fiber coil is taken off from the bobbin, loosened, bundled, and set in a case, and a technique wherein, using the bobbin itself having a small diameter, the coil is loosened while being held on the bobbin, thereby reducing the side pressure acting on the optical fiber.

However, since the optical fiber in the loosened state is in a freely movable state, the coil is susceptible to deformation with vibration or impact and the deformation of the coil poses the problem of causing the bending loss. As a technique for preventing such deformation of the coil, the Japanese Application Laid-Open No. 10-123342 discloses the technique of fixing the bundled coil at several discrete points, and the technique of fixing the coil to a container case enclosing the bobbin with a cushion material. However, the optical fiber is not fixed throughout the entire length in either of the techniques and thus there is the possibility that under exposure to vibration over the long term, the optical fiber suffers vibration deviation, so as to undergo local bending to result in causing bending loss. Japanese Patent Application Laid-Open No. 62-19810 discloses an optical fiber gyroscope wherein the periphery and splices of the fiber are fixed with resin, but this technique cannot be applied to the DCF for the reason that the DCF is weak against bending and much longer than the fiber used in the optical fiber gyroscope and thus the pressure of the resin possibly causes microbend loss.

### Disclosure of the Invention

In order to solve the above problems, an object of the present invention is to provide a dispersion compensator as an optical component with reduced bending loss and without occurrence of vibration deviation even under vibration over the long term, and a production method of the dispersion compensator.

For accomplishing the above object, an optical component of the present invention comprises an optical fiber coil comprised of an optical fiber wound in a coil shape, and a resin surrounding at least the periphery of the optical fiber coil to retain the shape of the optical fiber coil.

A production method of the optical component according to the present invention comprises an optical fiber coil forming step of winding an optical fiber to form an optical fiber coil, and a resin portion forming step of forming a resin around the periphery of the optical fiber coil formed in the optical fiber forming step.

Another production method of the optical component according to the present invention comprises a step of coating the periphery of a covering of an optical fiber with a resin, and a step of winding the optical fiber coated with the resin around a center cylinder to form an optical fiber coil.

### Brief Description of the Drawings

Fig. 1 is a cross-sectional view to show the first embodiment of the dispersion compensator according to the present invention.
Fig. 2 is a plan view of the dispersion compensator in a state in which a container lid is taken off from the embodiment of Fig. 1.
Fig. 3 is a cross-sectional, structural diagram of the DCF used in the dispersion compensator according to the present invention.
Fig. 4 is a diagram to show an index profile of the DCF of Fig. 3.
Fig. 5 is a cross-sectional view to show a modification of the first embodiment of the optical component according to the present invention.
Fig. 6 is an enlarged, cross-sectional view to show the second embodiment of the optical component according to the present invention.
Fig. 7 is a diagram to show a bobbin in the embodiment of Fig. 6.
Fig. 8 is a diagram to show a production method of the embodiment of Fig. 6.
Fig. 9 is a diagram to show another production method of the embodiment of Fig. 6.
Fig. 10 is a plan view to show the third embodiment of the optical component according to the present invention in the state in which the container lid is taken off.
Fig. 11 and Fig. 12 are diagrams each of which shows an example in which the optical fiber coil is placed around the center cylinder.
Fig. 13 is a diagram to show an aligned state of the optical fiber in the optical fiber coil formed by winding the optical fiber around the center cylinder.
Fig. 14 is a diagram to show an example in which a plurality of optical fiber coils are arranged concentrically.
Fig. 15 is a diagram to show a layout example in which a plurality of optical fiber coils are stacked along the center axis of the coil shape.

### Best Mode for Carrying out the Invention

The preferred embodiments of the present invention will be described below in detail with reference to the accompanying drawings. For facilitating understanding of description, like components will be denoted by the same reference numerals throughout the drawings as much as possible, and redundant description will be avoided.

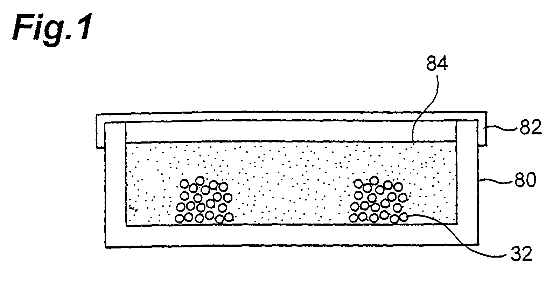

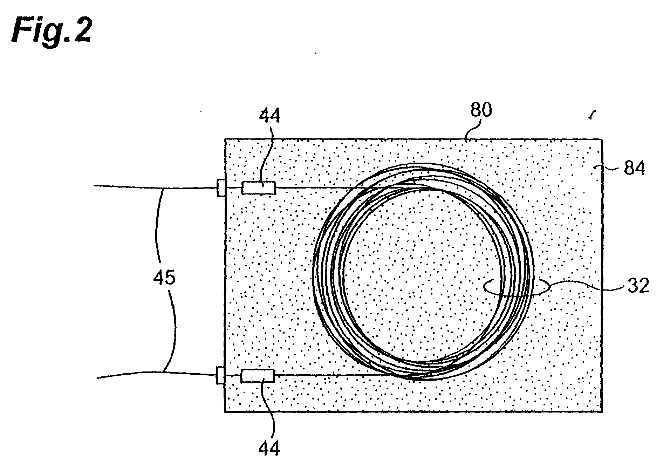

Fig. 1 is a cross-sectional view to show the first embodiment of the dispersion compensator which is an optical component according to the present invention, and Fig. 2 is a plan view to show the dispersion compensator from which a container lid 82 thereof is taken off. As illustrated in Fig. 1 and Fig. 2, the dispersion compensator of the present embodiment is constructed in such structure that an optical fiber coil 32 bundled in a state substantially free from winding stress is set in a housing 80 having a rectangular bottom surface. Each of the two ends of the optical fiber coil 32 is coupled to a pigtail fiber 45 at a fusion splice 44. A filler 84 fills the inside of the housing 80 so as to surround the optical fiber coil 32. It is preferable herein that the filler 84 be also interposed between windings of the optical fiber constituting the optical fiber coil 32. The housing 80 is closed by the lid 82 to be sealed.

The state substantially free from winding distortion herein means a state in which increase in transmission loss in the wavelength band of 1.55 µm and higher due to winding is reduced by 0.1 dB/km or more. The reason is that most of the transmission loss increase of the optical fiber coil 32 is canceled in the loosened state off the bobbin, as disclosed in Japanese Patent Application Laid-Open No. 10-123342, and the cancellation of winding distortion results in also canceling the transmission loss caused thereby.

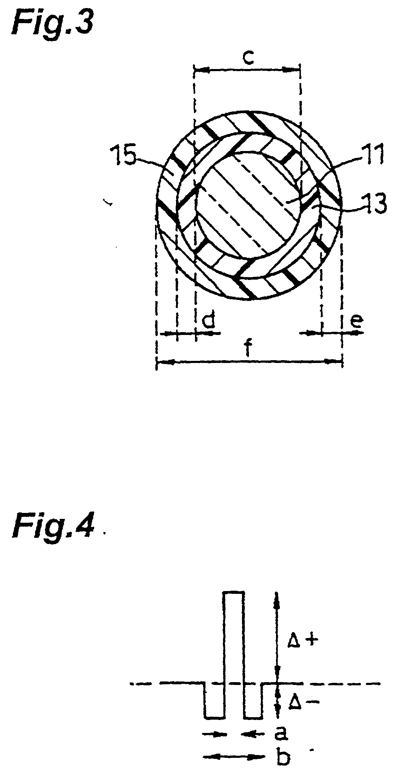

Fig. 3 is a cross-sectional view of the DCF forming this optical fiber coil 32 and Fig. 4 is a diagram to show the index profile thereof. As illustrated in Fig. 3, this DCF has two resin coating layers 13, 15 of concentric, cylindrical shells about the optical fiber 11 of glass. The glass part 11 is a double cladding type DCF in which the diameter a of the core part is 2.65 µm and the diameter b of the depressed part is 7.58 µm, the outside diameter c of the DCF is 100 µm, the thickness d of the primary coating layer 13 is 20 µm, the thickness e of the secondary coating layer 15 is 20 µm, and the outside diameter f of the fiber is 180 µm. The increase and decrease of index in the core part and the depressed part against the index of the cladding part, i.e., Δ+ and Δ-, are 2.1% and -0.4%, respectively. At 20°C the Young's modulus of the primary coating layer 13 is 0.06 kgf/mm² and the Youngs modulus of the secondary coating layer 15 is 65 kgf/mm². The chromatic dispersion coefficient and the chromatic dispersion slope of this DCF are -100 ps/nm/km and -0.29 ps/nm²/km, respectively, at the wavelength 1.55 µm, and the transmission loss is 0.40 dB/km.

For forming the coil of this DCF on the bobbin and thereafter taking it off from the bobbin to loosen it, it is preferable to preliminarily cover the cylinder of the bobbin with a lubricant, such as fine powder or the like, prior to the winding of the DCF on the bobbin and then pull it off the bobbin, as disclosed in Japanese Patent Application Laid-Open No. 10-123342. This lubricant can be talc (Rikagakujiten Version 4, p239) used as a powder inorganic filler, for example. In another method, the bobbin used is one with reducible cylinder diameter, and pulling of the fiber is facilitated by reducing the cylinder diameter of the bobbin after the winding. The tension during the winding of the DCF on the bobbin is preferably as small as possible and particularly preferably not more than 40 gf.

It is noted here that the bundled optical fiber coil is not limited to that obtained by winding the DCF around the bobbin and taking it off from the bobbin. It may also be fabricated in such a way that in the production process of the optical fiber coil the DCF is wound around a member equivalent to the bobbin to form the optical fiber coil, and thereafter the optical fiber coil is removed from this member. In another method, the coil can be formed by dropping the DCF directly into the housing 80 or 80a.

After the optical fiber coil 32 is formed in this way, a resin (filler) is applied onto the periphery of the coil and then cured. This curing can be thermal curing or ultraviolet curing, depending upon the properties of the resin. In an example of the thermal curing, the resin is cured by heating at 50°C for 24 hours.

During the application operation of the filler (resin), the surface tension of the resin is preferably not more than 40 dyn/cm², in order to prevent creation of bubbles etc. between fiber windings in the coil form. In order to allow the resin to fully penetrate into the spaces between the fiber windings, it is also preferable that the viscosity of the resin under the application be kept not more than 10000 cs. Further, it is preferable that during the curing of the resin the viscosity of the resin be kept not more than 10000 cs for two or more hours from the start of curing. This is for the purposes of allowing the resin to fully penetrate into the spaces between the fiber windings and preventing occurrence of unwanted microbend during the curing. This filler 84 can be one selected from thermosetting or ultraviolet-curing silicone resins having the Young's modulus of not more than 0.05 kg/mm² or high-viscosity filling compounds obtained by swelling a rubber, such as butadiene rubber, silicone rubber, or the like, with silicone oil, naphthene, or the like and adding another resin or the like thereto if necessary. If the optical fiber were fixed with either of ordinary adhesives and resins, the Young's modulus of the resin after cured would be not less than 50 kg/mm², and thus the over pressure would be exerted on the optical fiber, so as to bring about bending distortion. Thus use of the ordinary adhesives and resins is not preferred. By using the high-viscosity substances with flexibility as the filler as described above, the optical fiber can be fixed with certainty, without exerting such over pressure as to cause the bending distortion on the optical fiber forming the optical fiber coil 32. By charging the filler into the spaces between the fiber windings, the pressure on each fiber winding is uniformized, so as to suppress the microbend loss caused by irregular side pressure, which can facilitate fabrication of the dispersion compensator using the fine-diameter fiber (the glass diameter of not more than 100 µm and the coating thickness of not more than 140 µm), use of which was difficult before because of its weakness against such bending distortion, or using a fiber with small Δn permitting improvement in nonlinearity.

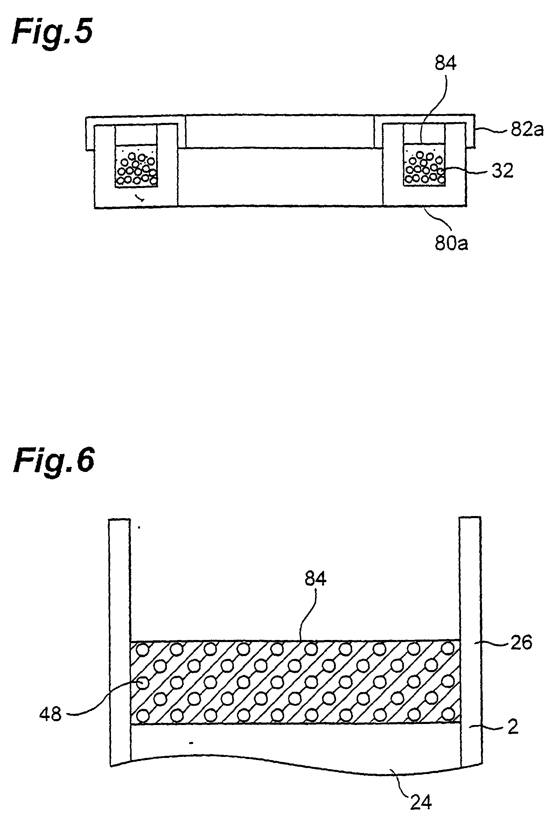

The shape of the housing 80 is not limited to the shape of Fig. 1, but it may also be an annular structure like the housing 80a illustrated in Fig. 5. In Fig. 1 and Fig. 5, the optical fiber coil 32 is illustrated in the form of contact with the bottom surface of the housing 80 or 80a, but the compensator may also be fabricated, for example, by first pouring a small amount of the filler into the housing 80 or 80a, then setting the bundled optical fiber coil 32 therein, thereafter pouring the rest filler into the housing, and then curing the filler. This method can decrease the pressure exerted from the bottom surface of the housing 80 or 80a onto the optical fiber coil 32 and thus is more preferable.

As described above, since the optical fiber coil 32 is surrounded by the filler 84, it can be housed in the housing 82 without breakage of windings and in the bundled state substantially free from the winding distortion of the optical fiber coil 32. Therefore, the compact dispersion compensator can be obtained in the structure in which the optical fiber coil is prevented from suffering fracture or characteristic variation due to vibration, impact, etc. and in which the transmission loss and temperature dependence of transmission loss are reduced.

The second embodiment of the dispersion compensator according to the present invention will be described below. The present embodiment is different from the first embodiment in that the optical fiber coil is kept wound around the bobbin.

Fig. 6 is an enlarged, cross-sectional view of the second embodiment. As illustrated in Fig. 6, the filler 84 fills the spaces between the fiber windings of the optical fiber coil 48 wound around the cylinder 24 of the bobbin 2 and between each optical fiber winding and the periphery of the cylinder of the bobbin 2 or the wall surface of flange 26. This filler 84 can be the same material as the filler in the first embodiment.

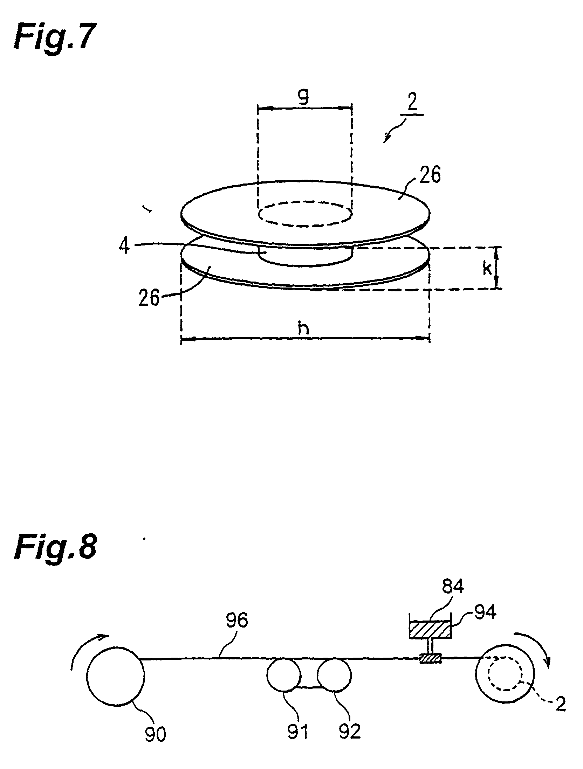

Fig. 7 is a perspective view of this bobbin 2. The bobbin is made of aluminum and in such size that the diameter g of the cylinder 24 is 100 mm, the diameter h of the flange 26 200 mm, and the winding width k 18 mm. In the present embodiment, the optical fiber coil 32 is prepared by winding the aforementioned DCF having the fiber length of 10 km on this bobbin 2 under the conditions of the winding pitch of 0.4 mm and the winding tension of 40 gf.

By using the high-viscosity substance with flexibility as the filler, the optical fiber can be surely fixed without exerting such over pressure as to cause the bending distortion on the optical fiber forming the optical fiber coil 48. Since the pressure on each fiber winding is uniformized by also filling the filler between the fiber windings, the microbend loss due to irregular side pressure can be suppressed and this makes easier the fabrication of the dispersion compensator using the small-diameter fiber, the use of which was difficult before because it was weak against such bending distortion, and the fiber with small Δn to improve nonlinearity.

In the present embodiment, the bobbin 2 is made of aluminum with a relatively large coefficient of thermal expansion. However, even if the periphery of the cylinder 24 of the bobbin 2 expands with increase in temperature, the filler 84 will absorb stress due to the expansion and thus this stress will not be transmitted to the optical fiber coil 48. Therefore, it can prevent occurrence of distortion of the optical fiber coil 48 due to the thermal expansion. This enhances reliability and obviates the need for use of an expensive material with a low coefficient of thermal expansion for the bobbin 2, thereby allowing reduction of cost.

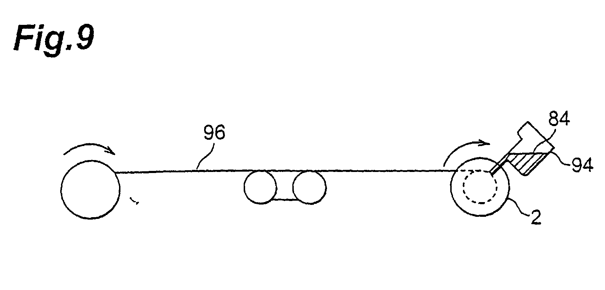

Methods for producing the dispersion compensator of the second embodiment will be described below. Fig. 8 and Fig. 9 are explanatory diagrams to explain the production methods.

In the production method illustrated in Fig. 8, the DCF 96 wound on a feed bobbin 90 is drawn via capstan rollers 91, 92 to be wound around the bobbin 2. On this occasion, the liquid filler 84 is delivered from a coater 94 placed before the bobbin 2 to coat the periphery of the DCF 96 almost uniformly. As a result, the filler 84 is almost uniformly charged into the gaps between windings of the DCF 96 on the bobbin 2.

In the production method illustrated in Fig. 9, the coater 94 is placed on the side of bobbin 2 and the filler 84 is applied onto the periphery of the cylinder 24 of the bobbin 2, which is the surface on which the DCF 96 is to be wound, and onto the surface of windings already placed thereon. This permits the filler 84 to be applied surely into the gaps between windings of the DCF 96.

When the filler 84 is placed between the windings of the optical fiber coil 48 in the state substantially free from the winding distortion on the bobbin 2, as described above, the optical fiber coil 48 can be surely fixed to the bobbin, without breakage of windings. The compact dispersion compensator can be obtained with preventing the fracture and characteristic variation of the optical fiber coil due to vibration, impact, etc. and with decreasing the transmission loss and the temperature dependence of transmission loss.

Next described is the third embodiment of the dispersion compensator according to the present invention. The present embodiment is different from the first embodiment in that the winding shape of the optical fiber coil is not a regular circle.

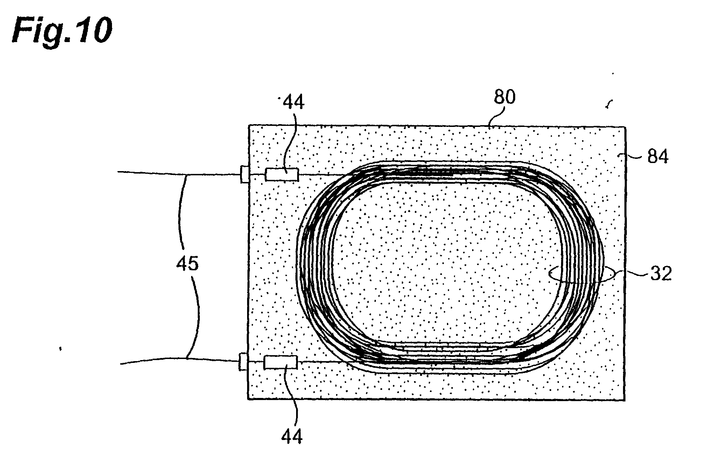

Fig. 10 is a plan view to show the state of the embodiment from which the container lid 82 is taken off. The cross-sectional view of this embodiment is substantially the same as that of Fig. 1. In this embodiment, as illustrated in Fig. 10, the winding shape of the optical fiber coil 32 is a nearly rectangular shape with round corners fitted to the housing 80. When the winding shape is fitted to the inside shape of the housing 80 in this way, the fiber length of each winding can be longer than in the case of the winding shape of the regular circle. This permits the housing 80 to be constructed in smaller size, whereby the dispersion compensator can be made more compact.

The dispersion compensator was fabricated in the following way; the DCF used was the same as in the first embodiment, this DCF 10 km long was wound around the bobbin having the cylinder diameter of 120 mm and the largest outside diameter of 200 mm, the optical fiber coil 32 thus formed was taken off from the bobbin and loosened into a bundle state, it was then set in the winding shape of the approximate rectangle as illustrated in Fig. 10 in the housing 80 having the inside dimensions of 210 × 130 mm, and the same filler as in the first embodiment was charged into the housing.

The optical fiber before the winding had such characteristics that at the wavelength 1.61 µm the chromatic dispersion coefficient was -120 ps/nm/km and the chromatic dispersion slope was -034 ps/mm²/km. The optical fiber had the transmission loss of 0.63 dB/km in the wound state on the bobbin. In contrast with it, the dispersion compensator of the present embodiment fabricated had the transmission loss of 0.41 dB/km, and the loss decrease of 0.22 dB/km was accomplished by loosening the windings of the optical fiber coil, which verified the effectiveness of the present embodiment to the loss decrease.

The present embodiment showed the example of the rectangular winding shape with round corners, but the winding shape may also be the shape of an ellipse, an ovoid form, or the like. Since the optical fiber coil is loosened into the bundle shape in the present embodiment, it is easy to adjust the winding shape so as to be fitted to the inside shape of the housing.

The filler (resin) used in the first, second, and third embodiments described above preferably has the following features.

The undisturbed penetration defined in JIS2200 is preferably between 5 and 200 both inclusive at 25°C. Further, the undisturbed penetration is more preferably between 5 and 200 both inclusive in the practical operation temperature range (-40° to 100°C). The reason is as follows: if the undisturbed penetration is below 5 the loss will become too large for practical use on the long wavelength side because of the microbend of optical fiber; and if it is over 200 the optical fiber coil will fail to keep its shape.

An amount of hydrogen evolving from the resin is preferably not more than 0.001 ml/g during the thermal treatment of 60°C X 24 hours. The reason is that the amount of evolving hydrogen over it will increase the loss of the optical fiber over the range of practical use.

The refractive index of the resin is preferably higher than that of the optical fiber. The reason is as follows: if the refractive index of the resin is lower than that of the cladding, unwanted light occurring at the optical fiber splices will propagate in the cladding; whereas, if the refractive index is higher the unwanted light occurring at the optical fiber splices will be guided efficiently to the outside of the optical fiber.

The resin satisfying these conditions is the silicone resin and an example thereof is KJR-9010 in the KJR series available from Shin-Etsu Chemical Co., Ltd.

The resin preferably contains a hydrogen absorber, for example, one selected from palladium alloys, La-Ni alloys, La-Ni-Mn alloys, and La-Ni-Al alloys. When the resin contains the hydrogen absorber, hydrogen can be prevented from penetrating into the optical fiber, so as to suppress increase of transmission loss due to hydrogen in the optical fiber.

As for the optical fiber forming the optical fiber coil, the present invention allows even use of the optical fiber having the bending loss of 1 dB/m or more under bending in the diameter of 20 mm at the wavelengths in the use wavelength band, use of which was difficult before.

It is also preferable to interpose a thin film having at least either one of a function of improving the strength of the optical fiber and a function of restraining intrusion of hydrogen into glass, a specific example of which is a carbon coating, between the glass of the optical fiber and the covering over it. This restrains growth of microcracks in the surface and prevents hydrogen from intruding into the glass, thereby preventing degradation of the optical fiber.

Further, the largest outside diameter of the optical fiber, i.e., the diameter of the covering is preferably not more than 150 µm in terms of compactification of the optical fiber.

The covering of the optical fiber is preferably an ultraviolet-curing resin having the Young's modulus in the range of 0.1-20 kg/mm². The reason is as follows: if the covering resin has the Young's modulus below 0.1 kg/mm² the resin will become so sticky as to adhere the optical fiber windings to each other after wound around the bobbin; if the Young's modulus is over 20 kg/mm² the optical fiber will increase the loss on the long wavelength side. An example of such resin is an urethane acrylate base ultraviolet-curing resin.

Further, the cladding diameter of the optical fiber is preferably not more than 100 µm. The reason is as follows: when the cladding diameter is not more than 100 µm, the capacity occupied by the optical fiber is small, so that the optical fiber coil itself can be formed in compact size; among optical fibers having an equal outside dimension, the smaller the cladding diameter, the larger the minimum bending curvature, so as to improve optical characteristics of the optical fiber related to the bending loss. On the other hand, the decrease in the cladding diameter will result in decreasing the rigidity of glass and bringing about microbend even with small external force to raise the possibility that the loss increases on the long wavelength side of the wavelengths used. When the fiber is coated with the resin as in the present invention, influence of external force is relieved and it permits use of the small diameter of not more than 100 µm, which was hard to use heretofore.

Further, the pull-out force of the optical fiber of the optical fiber coil is preferably not more than 120 g. When the pull-out force is not more than 120 g, the external force from the covering can be reduced on the glass of the optical fiber. The pull-out force herein can be measured by the following measuring method.
1) First, a paper pattern of 25 × 25 mm is prepared.
2) The fiber is fixed with the both ends thereof projecting from the both sides of the paper pattern with an adhesive, for example, Aron Alpha (jelly) + Aron Alpha setter.
3) The fiber and the adhesive are separated in the range of 10 mm from the one edge of the paper pattern with a knife.
4) A cut is made only in the hard part out of the fiber covering on the paper pattern portion on the separate side.
5) The glass part is broken by bending the cut portion formed in above 4), by 90°.
6) It is set in a test machine and the glass part is drawn out. The tensile force (pull-out force) is measured and the measurement is carried out by continuously pulling the glass part until it is drawn out. The tensile force thus obtained is defined as the pull-out force.

In the optical fiber of the optical fiber coil, a clearance of not less than 1 µm is preferably present between the glass part and the covering part thereon. This can restrain the external force from the covering on the optical fiber of the optical fiber coil.

At the input and output ends of the optical fiber coil in the above first, second, and third embodiments, optical fibers 45, for example SMFS or DSFs, different from the optical fiber coil are spliced by fusion to the ends of the optical fiber of the optical fiber coil 32 at fusion splices 44 so as to extend as terminals of the pigtail type to the outside of the dispersion compensator. It is also preferable that the splices 44 be surrounded by the resin 84 retaining the optical fiber coil, as illustrated in Fig. 10. The bending loss of the optical fiber spliced in the pigtail type is preferably smaller than the bending loss of the optical fiber forming the optical fiber coil. The reason is as follows: such leading-out optical fibers are often bent in smaller curvature than the bending curvature of the optical fiber coil so as to permit optional setting of the positions of the pigtail input and output ends in the component and it is thus preferable that the bending loss be suppressed in such cases.

The fiber of the optical fiber coil used is one in which the core does not contain GeO₂. This allows low-loss splicing on the occasion of the fusion splicing in the pigtail type.

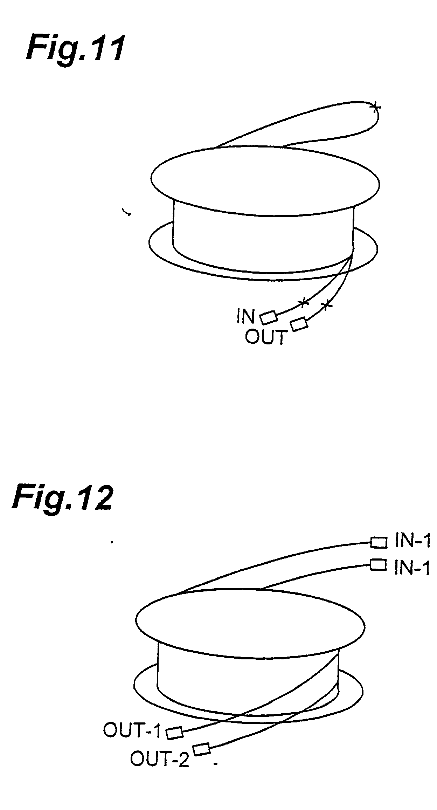

When the optical fiber coil is formed by winding the optical fiber around the center cylinder as in the above second embodiment, a plurality of optical fibers can be wound in the same direction around the center cylinder, as illustrated in Fig.11 and Fig.12; in Fig. 11 their first ends are spliced and the leading-out portions are drawn in the same direction; in Fig. 12 the plurality of optical fibers can form their respective optical fiber coils.

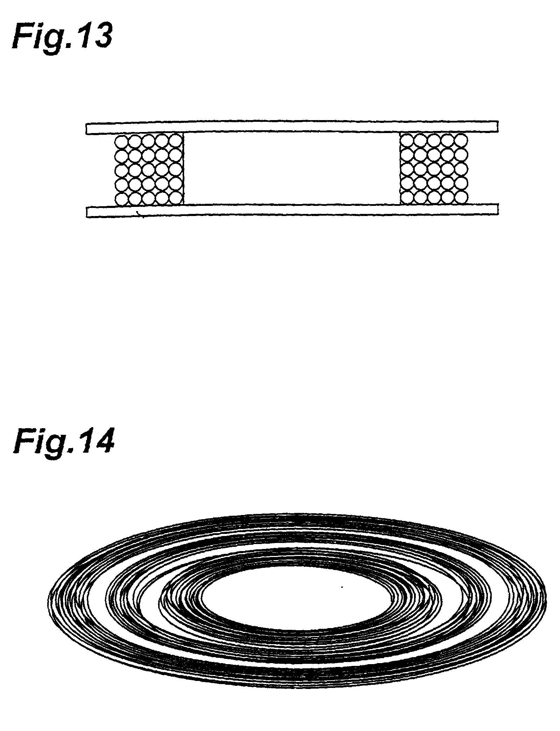

The microbend can be decreased by aligning the optical fiber as illustrated in Fig. 13 while the optical fiber is wound around the center cylinder.

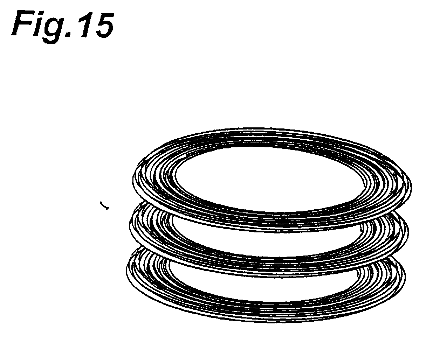

In another example, a plurality of optical fiber coils are used, and they are arranged concentrically in the lateral directions (on the plane normal to the center axis of the coil shape) as illustrated in Fig. 14, thereby achieving efficient utilization of the space. In another example a plurality of optical fibers are stacked as illustrated in Fig. 15, thereby increasing the space efficiency. The plurality of optical fiber coils in these examples may also be used while being set in a container case.

In the above embodiments, the optical fibers optically coupled to the optical fiber coil are preferably Hytrel-coated fibers.

On the occasion of winding the optical fiber into the coil form in the above embodiments, the optical fiber is preferably twisted 90° per meter or more. Normally, the polarization mode dispersion of not more than 0.5 ps/rkm is required for the optical fibers for communication. The polarization dispersion of the optical fiber depends upon the type of the optical fiber and the core noncircularity of the optical fiber, and the type of the optical fiber with the greatest polarization dispersion is DCF. The core noncircularity of the DCF is at most about 1%. Even in the case of such DCF with the core noncircularity of about 1%, mode coupling is promoted between polarization modes by giving the twist of 90° per meter, whereby the polarization dispersion of not more than 0.5 ps/.km can be realized.

Each of the above embodiments showed the example in which the dispersion compensator was produced using the double cladding type DCF. The present invention can also be applied similarly to the dispersion compensators using double core type and segment core type DCFs, without having to be limited to the embodiments.

### Industrial Utilization

As described above, since the dispersion compensators according to the present invention are constructed in such structure that the optical fiber coil set in the container case or on the bobbin is kept in the state substantially free from the winding distortion and that the cushion filler is placed between the windings of the optical fiber forming the coil, the optical fiber is surely held in the state free from the bending distortion and is provided with improved vibration resistance.

The dispersion compensators of the present invention as described can be suitably produced by the dispersion compensator producing methods according to the present invention.

## Claims

1. An optical component comprising an optical fiber coil comprised of an optical fiber wound in a coil shape, and a resin surrounding at least the periphery of the optical fiber coil to retain the shape of the optical fiber coil.

2. The optical component according to Claim 1, further comprising a housing case, wherein said optical fiber coil is placed in said housing case and said resin is placed in said housing case.

3. The optical component according to Claim 1, further comprising a cylinder, wherein said optical fiber coil is wound around said cylinder.

4. The optical component according to Claim 1, wherein undisturbed penetration, defined in JIS2200, of said resin is between 5 and 200 both inclusive.

5. The optical component according to Claim 1, wherein undisturbed penetration, defined in JIS2200, of said resin is not less than 5 at -40°C and not more than 200 at 100°C.

6. The optical component according to Claim 1, wherein an amount of hydrogen evolving from said resin is not more than 0.001 ml/g during a thermal treatment of 60°C X 24 hours.

7. The optical component according to Claim 1, wherein a refractive index of said resin is larger than that of a cladding of said optical fiber.

8. The optical component according to Claim 1, wherein said resin contains a hydrogen absorber.

9. The optical component according to Claim 1, wherein at wavelengths in a used wavelength region, at least one of chromatic dispersion coefficient and chromatic dispersion slope of said optical fiber has an opposite sign to that of an optical fiber for transmission line optically coupled to said optical component.

10. The optical component according to Claim 9, wherein said used wavelength region is not less than the wavelength of 1.50 µm.

11. The optical component according to Claim 1, wherein at wavelengths in a used wavelength region, said optical fiber has bending loss of not less than 1 dB/m when bent in the diameter of 20 mm.

12. The optical component according to Claim 1, wherein between a glass and a covering thereon in said optical fiber, there is a thin film provided with at least either one of a function of improving strength of the optical fiber and a function of restraining hydrogen from intruding into said glass.

13. The optical component according to Claim 1, wherein the diameter of the covering of said optical fiber is not more than 150 µm.

14. The optical component according to Claim 1, wherein a covering of said optical fiber is an ultraviolet-curing resin and the Young^{'}s modulus thereof is 0.1-20 kg/mm².

15. The optical component according to Claim 1, wherein the cladding diameter of said optical fiber is not more than 100 µm.

16. A production method of an optical component, comprising:
an optical fiber coil forming step of winding an optical fiber to form an optical fiber coil; and
a resin portion forming step of forming a resin around the periphery of the optical fiber coil formed in said optical fiber forming step.

17. The production method of the optical component according to Claim 16, wherein said optical fiber coil forming step comprises:
a step of forming an optical fiber wound around a center cylinder; and
a step of forming an optical fiber coil by taking off the wound optical fiber from said center cylinder.

18. The production method of the optical component according to Claim 16, wherein said resin portion forming step comprises:
a step of placing said optical fiber coil in a predetermined housing case; and
a step of filing a resin into said housing case to place the resin around said optical fiber coil.

19. The production method of the optical component according to Claim 16, wherein the viscosity is not more than 10000 cs during the formation of said resin around said optical fiber coil.

20. The production method of the optical component according to Claim 16, wherein the surface tension is not more than 40 dyn/cm² during the formation of said resin around the periphery of said optical fiber coil.

21. The production method of the optical component according to Claim 16, comprising a curing step of curing the resin formed, after said resin portion forming step.

22. The production method of the optical component according to Claim 21, wherein in said curing step of the resin the viscosity of the resin is kept not more than 10000 cs for two or more hours from a start of curing.

23. A production method of an optical component, comprising:
a step of coating the periphery of a covering of an optical fiber with a resin; and
a step of winding the optical fiber coated with the resin around a center cylinder to form an optical fiber coil.

24. The optical component according to Claim 1, comprising another optical fiber different from said optical fiber coil, said another optical fiber being spliced to at least one end of said optical fiber coil.

25. The optical component according to Claim 1, comprising another optical fiber fusion-spliced to at least one end of said optical fiber coil.

26. The optical component according to claim 1, comprising another optical fiber fusion-spliced to one end of said optical fiber coil, wherein said fusion-spliced portion of said another optical fiber, together with said optical fiber coil, is immersed in the resin.

27. The optical component according to Claim 24, wherein bending loss of said optical fiber coil is smaller than bending loss of said another optical fiber.

28. The optical component according to Claim 24, wherein in said another optical fiber the core does not contain GeO₂.

29. The optical component according to Claim 24, wherein said another optical fiber is a Hytrel-core fiber.

30. The optical component according to Claim 1, wherein said optical fiber coil is comprised of two optical fiber coils, and wherein first ends thereof are spliced to each other and second ends thereof not spliced are drawn from a common end side of the optical fiber coils.

31. The optical component according to Claim 1, wherein said optical fiber coil comprises aligned windings.

32. An optical component wherein a plurality of said optical components according to Claim 1 are set in one housing case.

33. The optical component according to Claim 1, wherein said optical fiber is twisted by 90° or more per meter.

34. The optical component according to Claim 1, wherein the shape of said optical fiber coil is noncircular.

35. The optical component according to Claim 1, wherein a pull-out force of said optical fiber is not more than 120 g.

36. The optical component according to Claim 1, wherein a clearance of not less than 1 µm is present between a glass part and a coating part of said optical fiber.

37. The optical component according to Claim 1, said optical component being a dispersion compensator for decreasing chromatic dispersion in a wavelength region of not less than the wavelength of 1.50 µm in an optical fiber transmission line,
wherein said optical fiber coil is an optical fiber coil obtained by winding a long optical fiber having chromatic dispersion coefficient and chromatic dispersion slope of an opposite sign to that of an optical fiber forming said optical fiber transmission line, by a plurality of turns, and making the fiber coil in a bundled state while decreasing transmission loss increase in the wavelength region of not less than the wavelength of 1.50 µm due to the winding by 0.1 dB/km or more.

38. A production method of an optical component, comprising:
a step of winding an optical fiber around a center cylinder to form an optical fiber coil; and
a step of coating the periphery of the optical fiber coil formed in said step, with a resin during said said winding step.
